# EUROPÄISCHE PATENTSCHRIFT

(11) **EP 4 505 094 B1**
(45) Veröffentlichungstag und Bekanntmachung des Hinweises auf die Patenterteilung: **25.03.2026**
(21) Anmeldenummer: 23707015.6
(22) Anmeldetag: 16.02.2023
(51) Int. Cl.: F16H 7/18, F16H 7/08, B62M 9/16

(54) **KETTENFÜHRUNG MIT VORGESPANNTEN FÜHRUNGSELEMENTEN**
CHAIN GUIDE WITH PRETENSIONED GUIDE ELEMENTS
GUIDE DE CHAÎNE AVEC ÉLÉMENTS DE GUIDAGE PRÉCONTRAINTS

(30) Priorität: 06.04.2022 DE 102022203451
(43) Veröffentlichungstag der Anmeldung: 12.02.2025
(73) Patentinhaber: Sport Import GmbH, 26188 Edewecht (DE)
(72) Erfinder: LAUER, Swen, 82467 Garmisch-Partenkirchen (DE)
(74) Vertreter: Fischer, Florian
(86) Internationale Anmeldenummer: PCT/EP2023/053982
(87) Internationale Veröffentlichungsnummer: WO 2023/193987

(56) Entgegenhaltungen:
- EP-A1- 2 140 170
- EP-A1- 2 166 197
- EP-A2- 1 367 227
- EP-B1- 2 140 170
- DE-A1- 102012 213 482
- FR-A- 1 190 167
- US-A1- 2008 070 731
- US-A1- 2013 217 527
- US-A1- 2017 045 121
- US-A1- 2018 022 418

## Beschreibung

Das hierin beschriebene innovative Konzept betrifft eine Kettenführung zum Führen einer Kette eines Kettenantriebs bei Fahrzeugen, insbesondere bei Zweirädern. Die Kettenführung kann die Kette gegen ein unbeabsichtigtes Herunterfallen von einem Ritzel und dergleichen bewahren.

Kettenantriebe sind ein bewährtes Mittel, um bei Fahrzeugen die Antriebskraft auf das angetriebene Rad bzw. die angetriebenen Räder zu übertragen. Insbesondere bei Fahrrädern und Motorrädern kommen Antriebsketten häufig zum Einsatz. So überträgt beispielsweise bei Fahrrädern eine Antriebskette die Kraft von der Tretkurbel, und dem daran befestigten Antriebsritzel bzw. Kettenblatt, auf das Hinterrad. Bei Motorrädern, Mofas, etc. aber auch bei E-Bikes, Pedelecs und dergleichen überträgt die Antriebskette die Antriebskraft des Motors vom Antriebsritzel auf das Hinterrad.

Fahrräder mit Gangschaltung weisen in der Regel ein Schaltwerk auf. Dieses ist mittels eines Schaltauges, auch Ausfallende genannt, im Bereich der Hinterradachse am hinteren Rahmendreieck befestigt. Mit Hilfe des Schaltwerks kann die Kette auf die unterschiedlichen Ritzel des Zahnkranzes bewegt werden, um die einzelnen Gänge zu schalten. Ein solches Schaltwerk weist einen federbetätigten Ausleger auf, um die unterschiedliche Kettenlänge auf unterschiedlich großen Ritzeln auszugleichen und die Kette dadurch auf Spannung zu halten.

Bedingt durch Schläge auf das Hinterrad, beispielsweise beim Herunterfahren eines Bordsteins oder beim Bergabfahren mit einem Mountainbike, kann der federbetätigte Ausleger des Schaltwerks ungewollt nach vorne schnellen. Dadurch lässt die Spannung der Kette kurzzeitig nach und die Kette hängt durch. Aufgrund der fehlenden Kettenspannung kann es passieren, dass sich die schlaffe Kette vom antriebsseitigen Kettenblatt löst. Die Kette fällt dann vom Kettenblatt herunter.

Diese Problematik kann aber auch bei Zweirädern ohne Schaltwerk auftreten. Beispielsweise dann, wenn die Kette generell eine zu geringe Spannung aufweist. Auch hier besteht die Gefahr, dass sich die Kette bei Schlägen auf das Hinterrad vom antriebsseitigen Ritzel bzw. Kettenblatt löst.

Um diesem Problem zu begegnen, sind sogenannte Kettenführungen (Chain Guides) erhältlich ,wie sie beispielsweise in der EP 1 367 227 A2 oder in der EP 2 140 170 A1 beschrieben sind.

Im Fahrradbereich werden Kettenführungen insbesondere bei bergab orientierten Mountainbikes angeboten, da es hier vermehrt zu den oben beschriebenen Schlägen auf das Hinterrad kommt. Bei den Kettenführungen gibt es unterschiedliche Ausgestaltungen und Platzierungsmöglichkeiten. Allen Kettenführungen gemein ist jedoch ein Führungsschlitten (Slider), durch den die Kette hindurchläuft. Dieser Führungsschlitten hält die Kette weitestgehend an Ort und Stelle, sodass die Gefahr des Herunterfallens der Kette dadurch deutlich minimiert werden kann.

Derartige Führungsschlitten sind meist zweiteilig ausgestaltet. Zum Einlegen der Kette wird der Schlitten geöffnet, indem die zwei Schlittenteile gegeneinander bewegt werden. Nach dem Einlegen der Kette werden dann die beiden Schlittenteile miteinander verschraubt, sodass die Kette zwischen den beiden fixierten Schlittenteilen hindurchlaufen kann. Die Verschraubung bietet eine sichere und solide Art der Befestigung der beiden Schlittenteile. Es hat sich in der Praxis jedoch gezeigt, dass die Verschraubung insofern unpraktisch ist, dass die Kettenführung nicht werkzeuglos wieder geöffnet werden kann, um beispielsweise die Kette unterwegs zu reparieren oder die Kette bei einem sogenannten Kettenklemmer (Chain Suck) wieder zu lösen.

In einer anderen Variante werden die zwei Schlittenteile mit einem Schnappverschluss (Snap-Fit) zusammengehalten. Dies ermöglicht ein werkzeugloses Öffnen und Schließen des Schlittens. Es hat sich jedoch gezeigt, dass diese Art der Befestigung nur bedingt geeignet ist, da sich der Schnappverschluss während der Fahrt öffnen kann, sodass sich der Schlitten öffnet und die Kette nicht mehr geführt ist. Dies ist insbesondere bei Downhill Bikes bzw. bei ruppigen Abfahrten im Gelände zu beobachten. Außerdem tendiert der Schnappverschluss dazu auszuleihern.

Es ist daher eine Aufgabe der vorliegenden Erfindung, bestehende Konzepte von Kettenführungen dahingehend zu verbessern, dass der Führungsschlitten unkompliziert und vorzugsweise werkzeuglos zu öffnen bzw. schließen ist, und dabei trotzdem eine feste und sichere Verbindung zwischen den einzelnen Schlittenteilen besteht.

Dieses Ziel wird erreicht durch eine Kettenführung gemäß Anspruch 1. Weitere Ausführungsformen und vorteilhafte Aspekte dieser Kettenführung sind in den jeweils abhängigen Patentansprüchen genannt.

Die erfindungsgemäße Kettenführung dient zum Führen einer Antriebskette eines Fahrzeugs mit Kettentrieb. Die Kettenführung weist ein Montageteil auf, mittels dem die Kettenführung an dem jeweiligen Fahrzeug montiert wird. Die Kettenführung weist außerdem einen an dem Montageteil befestigten Führungsschlitten auf, der die Antriebskette führt, wenn die Kettenführung am Fahrzeug montiert ist. Der Führungsschlitten weist ein erstes Führungselement und ein relativ dazu drehbares zweites Führungselement auf, wobei die zu führende Antriebskette zwischen diesen beiden Führungselementen hindurchläuft, wenn die Kettenführung am Fahrzeug montiert ist. Erfindungsgemäß sind die beiden Führungselemente mittels einer Vorspannvorrichtung gegeneinander vorgespannt, und zwar quer zur Laufrichtung der Kette. Die beiden Führungselemente halten sich aufgrund der Vorspannung gegenseitig zusammen, in der Art und Weise einer vorgespannten Klammer. Wenn diese Vorspannung anliegt, bedarf es einer hohen Kraft, um die beiden Führungselemente gegeneinander zu verdrehen. In einigen Fällen ist eine mechanische Sicherung vorgesehen, die eine Verdrehung der beiden Führungselemente im vorgespannten Zustand unterbindet. Erst wenn die beiden Führungselemente translatorisch, entgegen der Spannkraft voneinander wegbewegt werden, können die beiden Führungselemente anschließend gegeneinander verdreht werden. Dies erlaubt es, dass die beiden Führungselemente im vorgespannten Zustand fest miteinander verbunden sind, sodass sich diese während der Fahrt nicht unbeabsichtigt öffnen können. Andererseits kann der Führungsschlitten, zum Beispiel zu Wartungszwecken, einfach geöffnet werden, indem die beiden Führungselemente zunächst entgegen der Vorspannkraft voneinander gelöst und anschließend gegeneinander verdreht werden.

Einige Ausführungsbeispiele sind exemplarisch in der Zeichnung dargestellt und werden nachstehend erläutert. Es zeigen:
- Fig. 1: eine Explosionsdarstellung einer erfindungsgemäßen Kettenführung gemäß einem Ausführungsbeispiel,
- Fig. 2A: eine schematische Draufsicht auf eine Kettenführung im geschlossenen Zustand gemäß einem Ausführungsbeispiel,
- Fig. 2B: eine schematische Draufsicht auf eine Kettenführung im geöffneten Zustand gemäß einem Ausführungsbeispiel, und
- Fig. 3: eine schematische Draufsicht auf ein zweites Führungselement mit Verzahnung gemäß einem Ausführungsbeispiel.

Im Folgenden werden Ausführungsbeispiele mit Bezug auf die Figuren näher beschrieben, wobei Elemente mit derselben oder ähnlichen Funktion mit denselben Bezugszeichen versehen sind.

Die hierin beschriebene Kettenführung ist für ein Fahrzeug geeignet, das mittels eines Kettentriebs angetrieben wird. Das heißt, die zu führende Kette des Kettentriebs verbindet den Antrieb des Fahrzeugs (z.B. Tretkurbel, Motor, etc.) mit dem Abtrieb des Fahrzeugs (Getriebe, Ritzelpaket, Kassette, Hinterrad, etc.). Bei dem Fahrzeug kann es sich beispielsweise um einspurige Fahrzeuge, insbesondere um Zweiräder handeln. Hierunter fallen beispielsweise unmotorisierte Fahrräder, die mittels einer Tretkurbel angetrieben werden, sowie motorisierte Fahrräder, wie z.B. E-Bikes und Pedelecs, die einen zusätzlichen Motor, insbesondere in Form eines Elektromotors, aufweisen. Die hierin beschriebene Kettenführung ist aber auch für motorisierte Zweiräder, wie z.B. Mofas, Motorräder und dergleichen geeignet, sofern diese über einen Kettentrieb verfügen. Ferner fallen mehrspurige Fahrzeuge mit Kettentrieb, wie z.B. Quads und dergleichen, unter den hierin verwendeten Begriff des Fahrzeugs. Für die nachfolgende Beschreibung der erfindungsgemäßen Kettenführung wird rein beispielhaft Bezug genommen auf ein Fahrrad. Alle hierin gemachten Ausführungen bzw. Erläuterungen gelten aber gemeinhin für alle Fahrzeuge mit Kettentrieb, insbesondere für die zu Beginn dieses Absatzes erwähnten Kategorien von Fahrzeugen.

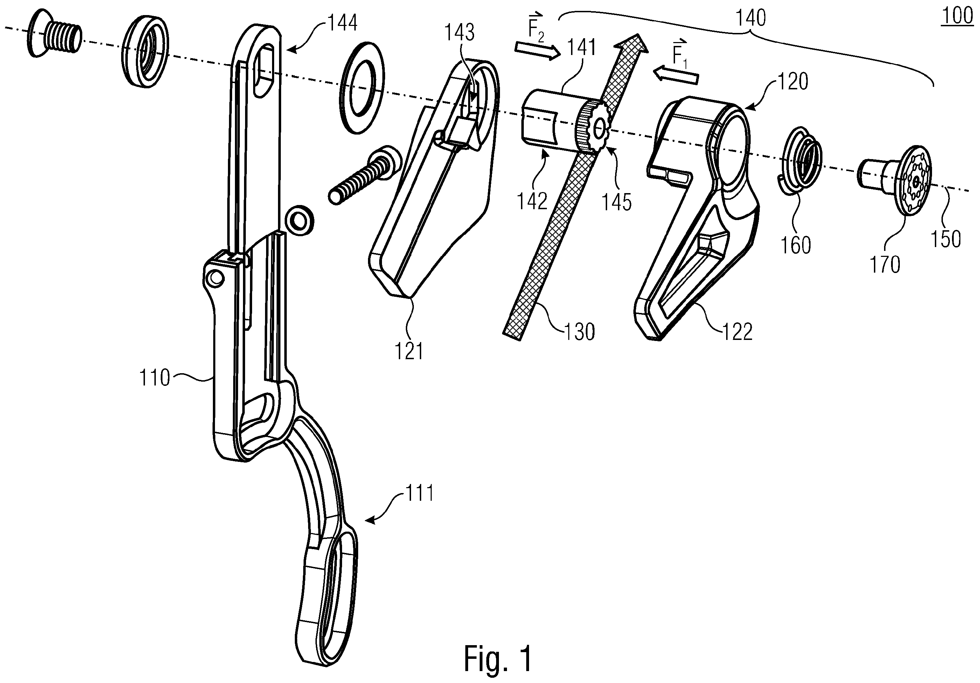

Figur 1 zeigt zunächst eine Explosionsdarstellung einer erfindungsgemäßen Kettenführung 100. Die Kettenführung weist ein Montageteil 110 auf, mittels dem die Kettenführung 100 an dem Fahrzeug montiert wird. Beispielsweise kann das Montageteil 110 einen Anbringungsabschnitt 111 aufweisen, der am Rahmen eines Fahrrads in einem Bereich um das Tretlager herum angebracht wird. Wie hier beispielhaft gezeigt ist, kann der Anbringungsabschnitt 111 Langlöcher für Schrauben aufweisen. Die Schrauben werden durch die Langlöcher geführt und kommen mit entsprechenden, dahinterliegenden, Gewindebohrungen im Fahrradrahmen zum Eingriff. Somit kann das gesamte Montageteil 110 am Fahrzeug bzw. am Fahrrad montiert werden.

Die Kettenführung 100 weist außerdem einen an dem Montageteil 110 befestigten Führungsschlitten 120 auf. Der Führungsschlitten 120 ist erfindungsgemäß mehrteilig (z.B. mindestens zweiteilig) ausgestaltet. Der Führungsschlitten 120 weist zumindest ein erstes Führungselement 121 sowie ein relativ dazu drehbares zweites Führungselement 122 auf.

Der Führungsschlitten 120 dient zum Führen der Antriebskette, wobei die zu führende Antriebskette zwischen den beiden Führungselementen 121, 122 läuft, wenn die Kettenführung 100 am Fahrzeug montiert ist.

Die zu führende Kette ist der Übersichtlichkeit wegen hier nicht dargestellt. Sie verläuft jedoch im zusammengebauten und am Fahrzeug montierten Zustand der Kettenführung 100 zwischen den beiden Führungselementen 121, 122 hindurch, was in Form des Pfeils 130 dargestellt ist. Dieser Pfeil 130 symbolisiert zudem die Laufrichtung der Kette.

Erfindungsgemäß sind die beiden Führungselemente 121, 122 mittels einer Vorspannvorrichtung 140 gegeneinander vorgespannt, und zwar quer zur Laufrichtung 130 der Kette. Das heißt, das erste Führungselement 121 wird mittels der Vorspannvorrichtung 140 in Richtung zu dem zweiten Führungselement 122 hin gedrückt, was durch den Kraftvektor *̅F̅*̅₁̅ dargestellt ist. Das zweite Führungselement 122 wird mittels der Vorspannvorrichtung 140 in Richtung zu dem ersten Führungselement 121 hin gedrückt, was durch den Kraftvektor *̅F̅*̅₂̅ dargestellt ist.

Wie eingangs erwähnt wurde, sind die beiden Führungselemente 121, 122 quer zur Laufrichtung 130 der Kette gegeneinander vorgespannt. Das heißt, die Kraftvektoren *̅F̅*̅₁̅ und *̅F̅*̅₂̅ verlaufen quer zur Kettenlaufrichtung 130. Darunter kann insbesondere verstanden werden, dass die Kraftvektoren *̅F̅*̅₁̅ und *̅F̅*̅₂̅ im Wesentlichen orthogonal zur Kettenlaufrichtung 130 gerichtet sind. Somit wären also auch die beiden Führungselemente 121, 122 im Wesentlichen orthogonal zur Laufrichtung 130 der Kette gegeneinander vorgespannt.

Das erste Führungselement 121 ist drehfest am Montageteil 110 befestigt. Das zweite Führungselement 122 ist drehbar gegenüber dem ersten Führungselement 121. Wie eingangs erwähnt wurde, ist das zweite Führungselement 122 zum ersten Führungselement 121 hin vorgespannt. Die beiden Führungselemente 121, 122 weisen also eine Art vorgespannte Klemmverbindung auf, wobei sie aufgrund der Vorspannung gegenseitig zueinander hingezogen werden. Die gegenseitigen Anziehungskräfte, d.h. die Kraftvektoren *̅F̅*̅₁̅ und *̅F̅*̅₂̅, können dabei so stark sein, dass eine Drehung des zweiten Führungselements 122 nicht möglich ist.

Um das zweite Führungselement 122 nun gegenüber dem ersten Führungselement 121 drehen zu können, muss zunächst die Vorspannung gelöst werden. Erfindungsgemäß ist der Führungsschlitten 120 hierfür so ausgestaltet, dass das zweite Führungselement 122 zuerst vom ersten Führungselement 121 weg bewegt werden muss, um es entgegen der Vorspannung vom ersten Führungselement 121 zu lösen, bevor es anschließend gegenüber dem ersten Führungselement 121 gedreht werden kann.

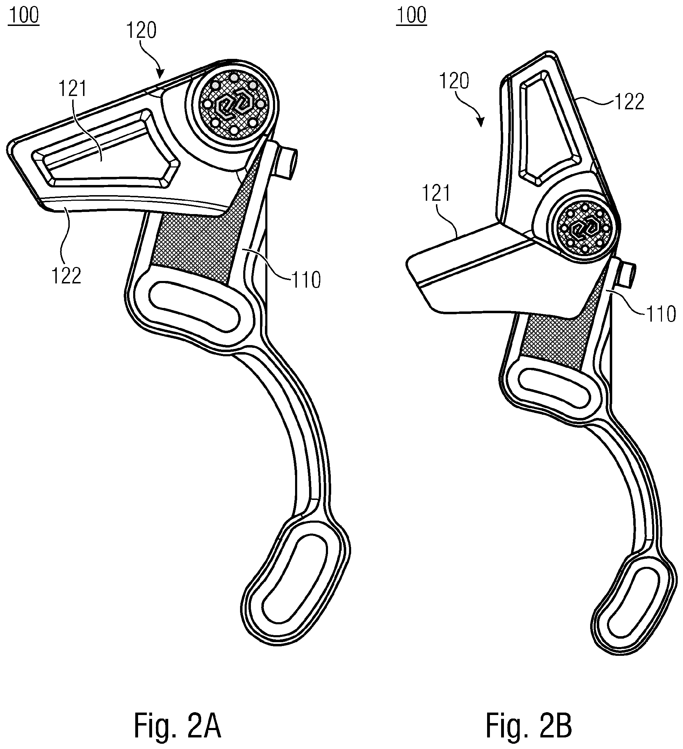

**Figur 2A** **zeigt** eine Frontalansicht der erfindungsgemäßen Kettenführung 100 in einem zusammengebauten Zustand, wobei hier der Führungsschlitten 120 geschlossen ist. Das heißt, das erste Führungselement 121 und das zweite Führungselement 122 liegen sich deckungsgleich gegenüber, sodass die Kette zwischen den beiden Führungselementen 121, 122 hindurchlaufen kann. Dies entspricht dem Zustand der Kettenführung 100 im Betrieb.

In diesem geschlossenen Zustand kann die Vorspannvorrichtung 140 eine untere Einrastposition aufweisen. Das heißt, das zweite Führungselement 122 kann in dieser Position fixiert einrasten, sodass es sich nicht mehr gegenüber dem ersten Führungselement 121 drehen lässt, wenn die Vorspannkräfte *̅F̅*̅₁̅ und *̅F̅*̅₂̅ wirken. Auch hier gilt wieder: Das zweite Führungselement 122 muss erfindungsgemäß erst von dem ersten Führungselement 121 wegbewegt werden, um die Vorspannung zu lösen. Erst dann löst sich das zweite Führungselement 122 aus seiner unteren Einrastposition und kann gegenüber dem ersten Führungselement 121 gedreht werden. In diesem Fall könnte es beispielsweise nach oben geklappt werden, um den Führungsschlitten 120 zu öffnen (siehe Figur 2B).

Figur 2B zeigt eine Frontalansicht der erfindungsgemäßen Kettenführung 100 in einem zusammengebauten Zustand, wobei hier der Führungsschlitten 120 geöffnet ist. Das heißt, das zweite Führungselement 122 ist gegenüber dem ersten Führungselement 121 gedreht und nach oben geklappt. In diesem geöffneten Zustand kann die Kette aus der Kettenführung 100 entnommen werden.

Hier kann die Vorspannvorrichtung 140 eine obere Einrastposition aufweisen. Das heißt, das zweite Führungselement 122 kann in dieser hochgeklappten Position fixiert einrasten, sodass es sich nicht mehr gegenüber dem ersten Führungselement 121 drehen lässt, wenn die Vorspannkräfte *̅F̅*̅₁̅ und *̅F̅*̅₂̅ wirken. Auch hier gilt wieder: Das zweite Führungselement 122 muss erfindungsgemäß erst von dem ersten Führungselement 121 wegbewegt werden, um die Vorspannung zu lösen. Erst dann löst sich das zweite Führungselement 122 aus seiner oberen Einrastposition und kann gegenüber dem ersten Führungselement 121 gedreht werden. In diesem Fall könnte es wieder nach unten geklappt werden, um den Führungsschlitten 120 wieder zu schließen (siehe Figur 2A).

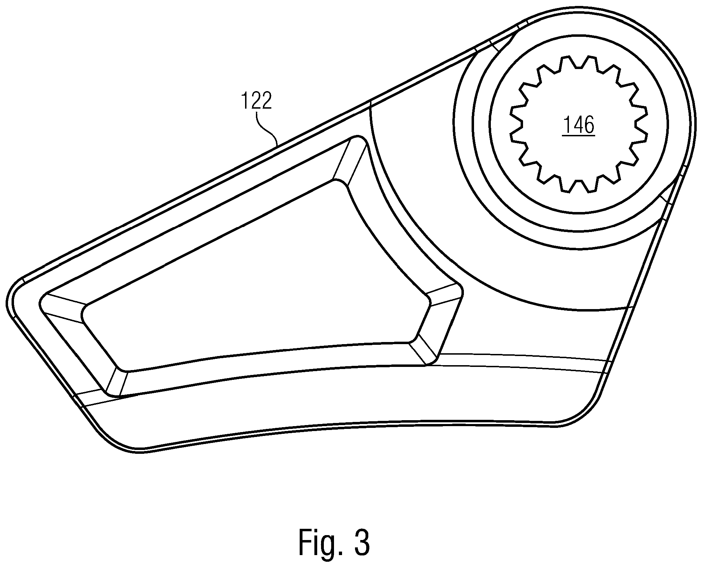

Die beschriebenen Einrastpositionen können beispielsweise mittels geeigneter Zahnkonturen ermöglicht werden, wie es später unter Bezugnahme auf die Figuren 1 und 3 noch näher erläutert wird.

Zunächst sei nochmals auf Figur 1 verwiesen. Hier ist zu sehen, dass die beiden Führungselemente 121, 122 entlang einer gemeinsamen Rotationsachse 150 relativ zueinander drehbar sind, und dass die Vorspannvorrichtung 140 ebenfalls entlang dieser Rotationsachse 150 angeordnet ist.

In dieser beispielhaften Ausgestaltung weist die Vorspannvorrichtung 140 ein Adapterstück 141 auf. Dieses Adapterstück 141 ist, entlang der Rotationsachse 150 betrachtet, zwischen dem ersten Führungselement 121 und dem zweiten Führungselement 122 angeordnet. Das Adapterstück 141 ist ausgestaltet, um das erste Führungselement 121 drehfest gegenüber dem Montageteil 110 an selbigem zu fixieren.

Hierfür kann das Adapterstück 141 auf einer dem ersten Führungselement 121 zugewandten Seite eine Kontur 142 aufweisen, die ausgestaltet ist, um in eine, im ersten Führungselement 121 ausgebildete, komplementäre Kontur 143 einzugreifen, um hierüber eine formschlüssige und drehfeste Verbindung mit dem ersten Führungselement 121 herzustellen. Bei diesen Konturen 142, 143 kann es sich um bestimmte, zueinander komplementäre, Formgebungen handeln, die sowohl im Adapterstück 141 als auch im ersten Führungselement 121 ausgestaltet sein können. Diese komplementären Konturen 142, 143 passen nach dem Schlüssel-Schloss-Prinzip zusammen und bilden eine formschlüssige und drehfeste Verbindung. In Figur 1 ist rein beispielhaft ein rundes Adapterstück 141 mit zwei abgeflachten Kanten gezeigt. Diese Form (rund mit abgeflachten Kanten) findet sich auch dementsprechend in dem ersten Führungselement 121 wieder (siehe Bezugszeichen 143).

Auch das Montageteil 110 kann eine entsprechende Kontur 144 aufweisen, die komplementär zur Kontur 142 des Adapterstücks 140 ist. Das Adapterstück 141 kann hierbei durch die komplementäre Kontur 143 im ersten Führungselement 121 hindurchreichen und bis zu der komplementären Kontur 144 des Montageteils 110 reichen. Rückseitig, d.h. von einer dem ersten Führungselement 121 abgewandten Seite des Montageteils 110, kann das Adapterstück 141 mittels einer Schraube fixiert werden. Dadurch wird das Adapterstück 141 am Montageteil 110 fixiert, wobei das Adapterstück 141 mittels der komplementären Konturen 142, 143 gleichzeitig auch das erste Führungselement 121 drehfest bzw. verdrehsicher an dem Montageteil 110 fixiert.

Das Adapterstück 141 ist außerdem ausgestaltet, um das zweite Führungselement 122 drehbar gegenüber dem ersten Führungselement 121 an dem Montageteil 110 zu fixieren. Hierfür kann das Adapterstück 141 auf einer dem zweiten Führungselement 122 zugewandten Seite eine Verzahnung 145 aufweisen, die ausgestaltet ist, um in eine, in dem zweiten Führungselement 122 ausgebildete, komplementäre Verzahnung 146 (siehe Figur 3) einzugreifen, um ein stufenweises Verdrehen des zweiten Führungselements 122 gegenüber dem ersten Führungselement 121 zu ermöglichen.

Figur 3 zeigt eine Draufsicht auf das zweite Führungselement 122 mit einer entsprechenden Verzahnung 146. Diese Verzahnung 146 rastet in die komplementäre Verzahnung 145 im Adapterstück 141 ein (siehe Figur 1). Somit kann also das zweite Führungselement 122 stufenweise, d.h. Zahn für Zahn, verdreht werden. Hierüber können beispielweise die zuvor, unter Bezugnahme auf die Figuren 2A und 2B beschriebenen, Einrastpositionen realisiert werden. Beispielweise könnte ein erstes Verzahnungspaar eine drehfeste Verbindung in der unteren Einrastpositionen ermöglichen, und ein zweites Verzahnungspaar könnte eine drehfeste Verbindung in der oberen Einrastposition ermöglichen. Zusätzliche Verzahnungspaare zwischen dem ersten und zweiten Verzahnungspaar können demnach optional sein.

Das zweite Führungselement 122 ist dabei derart an dem Adapterstück 141 befestigt, dass ein Lösen der Verzahnungen 145, 146 mittels einer Bewegung entgegen der Vorspannung möglich ist. Das heißt, um das zweite Führungselement 122 zu drehen, muss das zweite Führungselement 122 erfindungsgemäß zunächst entgegen der Vorspannung *̅F̅*̅₁̅ und *̅F̅*̅₂̅ herausgezogen werden. Dadurch löst sich die Verzahnung 145, 146 zwischen dem zweiten Führungselement 122 und dem Adapterstück 141, und das zweite Führungselement 122 kann gedreht werden.

Figur 1 zeigt eine denkbare Ausgestaltung zur Realisierung dieser, entgegen der Vorspannung, lösbaren Verzahnung 145, 146. Hierfür sind auf einer dem Adapterstück 141 gegenüberliegenden Seite des zweiten Führungselements 122 ein Vorspannelement 160 und ein Fixierelement 170 vorgesehen. Diese Komponenten sind Teil der eingangs beschriebenen Vorspannvorrichtung 140, d.h. die Vorspannvorrichtung 140 weist in diesem Beispiel das Adapterstück 141, das Vorspannelement 160 und das Fixierelement 170 auf.

Das Vorspannelement 160 erzeugt die zur gegenseitigen Vorspannung der beiden Führungselemente 121, 122 benötigten Vorspannkräfte *̅F̅*̅₁̅ und *̅F̅*̅₂̅. Bei dem Vorspannelement 160 kann es sich beispielsweise um eine Feder handeln. Das Fixierelement 170 kann beispielsweise eine Schraube aufweisen. Der Schraubenkopf kann derart ausgestaltet sein, dass sich das Vorspannelement 160 daran abstützt.

Das zweite Führungselement 122 kann nun mittels des Fixierelements 170 im Sinne einer axialen Spielpassung an dem Adapterstück 141 befestigt werden, und zwar so, dass das zweite Führungselement 122 entlang der Rotationsachse 150 axial verschiebbar ist. Das heißt, ohne dem Vorspannelement 160 würde das zweite Führungselement 122, aufgrund der Spielpassung, frei auf dem Fixierelement 170 beweglich sein. Da das Vorspannelement 160 jedoch zwischen dem zweiten Führungselement 122 und dem Fixierelement 170 angeordnet ist (um die Vorspannung zu erzeugen), wird das zweite Führungselement 122 mittels des Vorspannelements 160 in Richtung des ersten Führungselements 121 gedrückt, und die axiale Spielpassung wird durch die Vorspannkraft ausgeglichen.

In Figur 3 wurde eine Verzahnung 146 gezeigt, als ein Beispiel für eine Kontur, die ein stufenweises (Zahn für Zahn) Verdrehen des zweiten Führungselements 122 relativ zu dem ersten Führungselement 121 ermöglicht. Es wäre aber auch denkbar, dass anstelle der Verzahnung jeweils eine zahnlose Reibfläche an dem Adapterstück 141 sowie an dem zweiten Führungselement 122 vorhanden ist. Diese zahnlose Reibfläche könnte beispielsweise in Form eines Konus realisiert sein. In diesem Falle könnte die Reibkraft am Konus bei angelegter Vorspannkraft *̅F̅*̅₁̅ und *̅F̅*̅₂̅ so hoch sein, dass ein Verdrehen des zweiten Führungselements 122 gegenüber dem ersten Führungselement 121 nicht möglich ist. Auch hier wäre dann erfindungsgemäß das Verdrehen erst möglich, nachdem das zweite Führungselement 122 entgegen der Vorspannung von dem ersten Führungselement 121 wegbewegt wird. Aufgrund der fehlenden Verzahnung, d.h. aufgrund der zahnlosen Kontur, würde hierbei ein stufenloses Verdrehen des zweiten Führungselements 122 relativ zu dem ersten Führungselement 121 ermöglicht werden.

Aufgrund der hierin beschriebenen erfindungsgemäßen Vorspannung der beiden Führungselemente 121, 122 kann der Führungsschlitten 120 werkzeuglos geöffnet und geschlossen werden. Zusätzlich sind die Vorspannkräfte *̅F̅*̅₁̅ und *̅F̅*̅₂̅ ausreichend groß, um ein unbeabsichtigtes Öffnen des Führungsschlittens 120 während der Fahrt zu vermeiden.

Die oben beschriebenen Ausführungsbeispiele stellen lediglich eine Veranschaulichung der Prinzipien des hierin beschriebenen innovativen Konzepts dar. Es versteht sich, dass Modifikationen und Variationen der hierin beschriebenen Anordnungen und Einzelheiten anderen Fachleuten einleuchten werden. Deshalb ist beabsichtigt, dass das hierin beschriebene Konzept lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Kettenführung (100) zum Führen einer Antriebskette eines Fahrzeugs, wobei die Kettenführung (100) aufweist:
ein Montageteil (110) mittels dem die Kettenführung (100) an dem Fahrzeug montiert wird, und
einen an dem Montageteil (110) befestigten Führungsschlitten (120) zum Führen der Antriebskette,
wobei der Führungsschlitten (120) ein erstes Führungselement (121) und ein relativ dazu drehbares zweites Führungselement (122) aufweist, wobei die zu führende Antriebskette zwischen diesen beiden Führungselementen (121, 122) läuft, wenn die Kettenführung (100) am Fahrzeug montiert ist, und
wobei die beiden Führungselemente (121, 122) mittels einer Vorspannvorrichtung (140), quer zur Laufrichtung (130) der Kette, gegeneinander vorgespannt sind,
**dadurch gekennzeichnet, dass**
der Führungsschlitten (120) derart ausgestaltet ist, dass das zweite Führungselement (122) zuerst vom ersten Führungselement (121) weg bewegt werden muss, um es entgegen der Vorspannung vom ersten Führungselement (121) zu lösen, bevor es anschließend gegenüber dem ersten Führungselement (121) gedreht werden kann.

2. Kettenführung (100) nach Anspruch 1,
wobei das erste Führungselement (121) drehfest am Montageteil (110) befestigt ist, und
wobei das zweite Führungselement (122) drehbar gegenüber dem ersten Führungselement (121) ist und zum ersten Führungselement (121) hin vorgespannt ist.

3. Kettenführung (100) nach einem der vorhergehenden Ansprüche,
wobei die Vorspannvorrichtung (140) eine untere Einrastposition aufweist, in der der Führungsschlitten (120) geschlossen ist, und in der das zweite Führungselement (122) drehfest gegenüber dem ersten Führungselement (121) fixiert ist.

4. Kettenführung (100) nach einem der vorhergehenden Ansprüche,
wobei die Vorspannvorrichtung (140) eine obere Einrastposition aufweist, in der der Führungsschlitten (120) geöffnet ist, und in der das zweite Führungselement (122) drehfest gegenüber dem ersten Führungselement (121) fixiert ist.

5. Kettenführung (100) nach einem der vorhergehenden Ansprüche,
wobei die beiden Führungselemente (121, 122) entlang einer gemeinsamen Rotationsachse (150) relativ zueinander drehbar sind, und
wobei die Vorspannvorrichtung (140) entlang dieser Rotationsachse (150) angeordnet ist.

6. Kettenführung (100) nach Anspruch 5,
wobei die Vorspannvorrichtung (140) ein Adapterstück (141) aufweist, wobei das Adapterstück (141) entlang der Rotationsachse (150) zwischen dem ersten Führungselement (121) und dem zweiten Führungselement (122) angeordnet ist, und
wobei das Adapterstück (141) ausgestaltet ist, um das erste Führungselement (121) drehfest gegenüber dem Montageteil (110) an selbigem zu fixieren, und um das zweite Führungselement (122) drehbar gegenüber dem ersten Führungselement (121) an dem Montageteil (110) zu fixieren.

7. Kettenführung (100) nach Anspruch 6,
wobei das Adapterstück (141) auf einer dem ersten Führungselement (121) zugewandten Seite eine Kontur (142) aufweist, die ausgestaltet ist, um in eine, im ersten Führungselement (121) ausgebildete, komplementäre Kontur (143) einzugreifen, um hierüber eine formschlüssige und drehfeste Verbindung mit dem ersten Führungselement (121) herzustellen.

8. Kettenführung (100) nach Anspruch 6 oder 7,
wobei das Adapterstück (141) auf einer dem ersten Führungselement (121) zugewandten Seite eine Kontur (142) aufweist, die ausgestaltet ist, um in eine, im Montageteil (110) ausgebildete, komplementäre Kontur (144) einzugreifen, um hierüber eine formschlüssige und drehfeste Verbindung mit dem Montageteil (110) herzustellen.

9. Kettenführung (100) nach einem der Ansprüche 6 bis 8,
wobei das Adapterstück (141) auf einer dem zweiten Führungselement (122) zugewandten Seite eine Kontur aufweist, die ausgestaltet ist, um ein stufenloses Verdrehen des zweiten Führungselements (122) relativ zu dem ersten Führungselement (121) zu ermöglichen.

10. Kettenführung (100) nach einem der Ansprüche 6 bis 8,
wobei das Adapterstück (141) auf einer dem zweiten Führungselement (122) zugewandten Seite eine Verzahnung (145) aufweist, die ausgestaltet ist, um in eine, in dem zweiten Führungselement (122) ausgebildete, komplementäre Verzahnung (146) einzugreifen, um ein stufenweises Verdrehen des zweiten Führungselements (122) gegenüber dem ersten Führungselement (121) zu ermöglichen.

11. Kettenführung (100) nach Anspruch 10,
wobei das zweite Führungselement (122) derart an dem Adapterstück (141) befestigt ist, dass ein Lösen der Verzahnungen (145, 146) mittels einer Bewegung entgegen der Vorspannung möglich ist.

12. Kettenführung (100) nach einem der Ansprüche 6 bis 11,
wobei auf einer dem Adapterstück (141) gegenüberliegenden Seite des zweiten Führungselements (122) ein Vorspannelement (160) und ein Fixierelement (170) vorgesehen sind,
wobei das zweite Führungselement (122) mittels des Fixierelements (170) im Sinne einer axialen Spielpassung an dem Adapterstück (141) befestigt ist, sodass das zweite Führungselement (122) entlang der Rotationsachse (150) axial verschiebbar ist, und
wobei das Vorspannelement (160) zwischen dem zweiten Führungselement (122) und dem Fixierelement (170) angeordnet ist, um so die Vorspannung zu erzeugen und die axiale Spielpassung auszugleichen.

## Claims

1. Chain guide (100) for guiding a drive chain of a vehicle, the chain guide (100) comprising:
a mounting part (110) by means of which the chain guide (100) is mounted on the vehicle, and
a slider (120) mounted on the mounting part (110) for guiding the drive chain,
wherein the slider (120) comprises a first guide element (121) and a second guide element (122) rotatable relative thereto, wherein the drive chain to be guided passes between these two guide elements (121, 122) when the chain guide (100) is mounted on the vehicle, and
wherein the two guide elements (121, 122) are preloaded against each other by means of a preloading device (140), transversely to the running direction (130) of the chain,
**characterized in that**
the slider (120) is configured such that the second guide element (122) has to be first moved away from the first guide element (121) in order to release the same from the first guide element (121) against the preload before the same can subsequently be rotated relative to the first guide element (121).

2. Chain guide (100) according to claim 1,
wherein the first guide element (121) is non-rotatably mounted on the mounting part (110), and
wherein the second guide element (122) is rotatable with respect to the first guide element (121) and is preloaded towards the first guide element (121).

3. Chain guide (100) according to any one of the preceding claims,
wherein the preload device (140) comprises a lower latching position in which the slider (120) is closed, and in which the second guide element (122) is fixed non-rotatably relative to the first guide element (121).

4. Chain guide (100) according to any one of the preceding claims,
wherein the preload device (140) comprises an upper latching position in which the slider (120) is open, and in which the second guide element (122) is fixed non-rotatably relative to the first guide element (121).

5. Chain guide (100) according to any one of the preceding claims,
wherein the two guide elements (121, 122) are rotatable relative to each other along a common rotation axis (150), and
wherein the preload device (140) is arranged along this rotation axis (150).

6. Chain guide (100) according to claim 5,
wherein the preload device (140) comprises an adapter piece (141), wherein the adapter piece (141) is arranged along the rotation axis (150) between the first guide element (121) and the second guide element (122), and
wherein the adapter piece (141) is configured to fix the first guide element (121) to the mounting part (110) non-rotatably relative to the same and to fix the second guide element (122) to the mounting part (110) rotatably relative to the first guide element (121).

7. Chain guide (100) according to claim 6,
wherein the adapter piece (141) comprises, on a side facing the first guide element (121), a contour (142) that is configured to engage in a complementary contour (143) formed in the first guide element (121) in order to establish a form-fit and non-rotatable connection with the first guide element (121).

8. Chain guide (100) according to claim 6 or 7,
wherein the adapter piece (141) comprises, on a side facing the first guide element (121), a contour (142) that is configured to engage in a complementary contour (144) formed in the mounting part (110) in order to establish a form-fit and non-rotatable connection with the mounting part (110).

9. Chain guide (100) according to any one of claims 6 to 8,
wherein the adapter piece (141) comprises, on a side facing the second guide element (122), a contour that is configured to allow a continuous rotation of the second guide element (122) relative to the first guide element (121).

10. Chain guide (100) according to any one of claims 6 to 8,
wherein the adapter piece (141) comprises, on a side facing the second guide element (122), a toothing (145) that is configured to engage in a complementary toothing (146) formed in the second guide element (122) in order to allow a stepwise rotation of the second guide element (122) relative to the first guide element (121).

11. Chain guide (100) according to claim 10,
wherein the second guide element (122) is mounted on the adapter piece (141) such that a release of the toothings (145, 146) is possible by means of a movement against the preload.

12. Chain guide (100) according to any one of claims 6 to 11,
wherein a preload element (160) and a fixing element (170) are provided on a side of the second guide element (122) opposite the adapter piece (141),
wherein the second guide element (122) is mounted on the adapter piece (141) by means of the fixing element (170) in the sense of an axial clearance fit, so that the second guide element (122) is axially displaceable along the rotation axis (150), and
wherein the preload element (160) is arranged between the second guide element (122) and the fixing element (170) in order to generate the preload and to compensate for the axial clearance fit.

## Revendications

1. Guide-chaîne (100) destiné à guider une chaîne d'entraînement d'un véhicule, le guide-chaîne (100) comprenant :
une pièce de montage (110) au moyen de laquelle le guide-chaîne (100) est monté sur le véhicule, et
un chariot de guidage (120) fixé à la pièce de montage (110) pour guider la chaîne d'entraînement,
le chariot de guidage (120) comportant un premier élément de guidage (121) et un deuxième élément de guidage (122) pouvant tourner par rapport au premier élément de guidage (121), la chaîne d'entraînement à guider circulant entre ces deux éléments de guidage (121, 122) lorsque le guide-chaîne (100) est monté sur le véhicule, et
les deux éléments de guidage (121, 122) étant précontraints l'un contre l'autre transversalement à la direction de déplacement (130) de la chaîne au moyen d'un dispositif de précontrainte (140),
**caractérisé en ce que**
le chariot de guidage (120) est conçu de telle sorte que le deuxième élément de guidage (122) doit d'abord être éloigné du premier élément de guidage (121) afin de le libérer du premier élément de guidage (121) à l'encontre de la précontrainte, avant de pouvoir ensuite être tourné par rapport au premier élément de guidage (121).

2. Guide-chaîne (100) selon la revendication 1,
le premier élément de guidage (121) étant fixé de manière solidaire en rotation sur la pièce de montage (110), et
le deuxième élément de guidage (122) pouvant tourner par rapport au premier élément de guidage (121) et étant précontraint vers le premier élément de guidage (121).

3. Guide-chaîne (100) selon l'une quelconque des revendications précédentes,
le dispositif de précontrainte (140) présentant une position d'encliquetage inférieure dans laquelle le chariot de guidage (120) est fermé et dans laquelle le deuxième élément de guidage (122) est fixé de manière solidaire en rotation par rapport au premier élément de guidage (121).

4. Guide-chaîne (100) selon l'une quelconque des revendications précédentes,
le dispositif de précontrainte (140) présentant une position d'encliquetage supérieure dans laquelle le chariot de guidage (120) est ouvert et dans laquelle le deuxième élément de guidage (122) est fixé de manière solidaire en rotation par rapport au premier élément de guidage (121).

5. Guide-chaîne (100) selon l'une quelconque des revendications précédentes,
les deux éléments de guidage (121, 122) pouvant tourner l'un par rapport à l'autre autour d'un axe de rotation commun (150), et
le dispositif de précontrainte (140) étant disposé le long de cet axe de rotation (150).

6. Guide-chaîne (100) selon la revendication 5,
le dispositif de précontrainte (140) comportant un adaptateur (141), l'adaptateur (141) étant disposé le long de l'axe de rotation (150) entre le premier élément de guidage (121) et le deuxième élément de guidage (122), et
l'adaptateur (141) étant conçu pour fixer le premier élément de guidage (121) de manière solidaire en rotation sur la pièce de montage (110), et pour fixer le deuxième élément de guidage (122) sur la pièce de montage (110) de manière à être rotatif par rapport au premier élément de guidage (121).

7. Guide-chaîne (100) selon la revendication 6,
l'adaptateur (141) présentant, sur un côté tourné vers le premier élément de guidage (121), un contour (142) qui est conçu pour s'engager dans un contour complémentaire (143) formé dans le premier élément de guidage (121) afin d'établir une liaison par complémentarité de forme et solidaire en rotation avec le premier élément de guidage (121).

8. Guide-chaîne (100) selon la revendication 6 ou 7,
l'adaptateur (141) présentant, sur un côté tourné vers le premier élément de guidage (121), un contour (142) qui est conçu pour s'engager dans un contour complémentaire (144) formé dans la pièce de montage (110) afin d'établir une liaison par complémentarité de forme et solidaire en rotation avec la pièce de montage (110).

9. Guide-chaîne (100) selon l'une quelconque des revendications 6 à 8,
l'adaptateur (141) présentant, sur un côté tourné vers le deuxième élément de guidage (122), un contour qui est conçu pour permettre une rotation continue du deuxième élément de guidage (122) par rapport au premier élément de guidage (121).

10. Guide-chaîne (100) selon l'une quelconque des revendications 6 à 8,
l'adaptateur (141) comportant, sur un côté tourné vers le deuxième élément de guidage (122), une denture (145) qui est conçue pour s'engager dans une denture complémentaire (146) formée dans le deuxième élément de guidage (122) afin de permettre une rotation par pas du deuxième élément de guidage (122) par rapport au premier élément de guidage (121).

11. Guide-chaîne (100) selon la revendication 10,
le deuxième élément de guidage (122) étant fixé à l'adaptateur (141) de telle sorte qu'il soit possible de désengager les dentures (145, 146) l'une de l'autre au moyen d'un mouvement à l'encontre de la précontrainte.

12. Guide-chaîne (100) selon l'une quelconque des revendications 6 à 11,
un élément de précontrainte (160) et un élément de fixation (170) étant prévus sur un côté du deuxième élément de guidage (122) opposé à l'adaptateur (141),
le deuxième élément de guidage (122) étant fixé à l'adaptateur (141) au moyen de l'élément de fixation (170) dans le sens d'un ajustement avec jeu axial, de sorte que le deuxième élément de guidage (122) peut coulisser axialement le long de l'axe de rotation (150), et
l'élément de précontrainte (160) étant disposé entre le deuxième élément de guidage (122) et l'élément de fixation (170) afin de générer la précontrainte et de compenser le jeu axial.
